# EUROPÄISCHE PATENTANMELDUNG

(11) **EP 1 982 965 A1**
(43) Veröffentlichungstag der Anmeldung: **22.10.2008**
(21) Anmeldenummer: 08010086.0
(22) Anmeldetag: 10.05.2006
(51) Int. Cl.: C04B 35/043, C04B 35/047, C04B 35/12, C04B 35/482

(54) **Feuerfestes keramisches Produkt**

(30) Priorität: 30.05.2005 AT 3532005
(62) Teilanmeldung aus: 06753542.7
(71) Anmelder: Refractory Intellectual Property GmbH & Co. KG, 1100 Wien (AT)
(72) Erfinder: Treimer, Robert, 8700 Leoben (AT)
(74) Vertreter: Becker, Thomas

(57) **Zusammenfassung**

Die Erfindung betrifft ein feuerfestes keramisches Produkt, das
a) ≥ 93 Masse-% mindestens einer refraktären Grundkomponente und
b) ≤ 7 Masse-% mindestens einer korrosionshemmenden Komponente aus der Gruppe:
b1) Verbindungen von Übergangsmetallen untereinander
b2) oxidische Verbindungen von Übergangsmetallen
b3) Verbindungen der Übergangsmetalle mit Ca, Ba, Sr

enthält.

## Beschreibung

Die Erfindung betrifft ein feuerfestes keramisches Produkt, insbesondere einen feuerfesten keramischen Formkörper.

Feuerfeste keramische Produkte, und zwar sowohl Massen als auch Formteile, finden zur Auskleidung metallurgischer Schmelzgefäße ebenso Anwendung wie zur Verwendung als Funktionalteile, insbesondere im Rahmen sekundärmetallurgischer Verfahren.

Dies gilt sowohl für Anwendungen in der Eisenmetall-Industrie wie für Anwendungen in der Nichteisenmetall-Industrie.

Das feuerfeste Material kommt nicht nur mit den metallurgischen Schmelzen, sondern auch mit korrespondierenden Schlacken in Berührung. Insoweit unterliegt das Feuerfestmaterial einem erheblichen chemischen/metallurgischen Korrosionsangriff.

Unter den bekannten basischen und nicht-basischen Werkstoffsorten zeigen bisher MgCr-Produkte mit Cr₂O₃ als schützendem Oxid den besten Korrosionsschutz gegenüber einem Angriff von insbesondere sauren, eisensilikatischen - und/oder kupferhältigen Schlacken. Diese Werkstoffsorten haben jedoch aufgrund der Anwesenheit von Chromoxid den Nachteil, dass es zur Freisetzung von toxischem Cr⁶⁺ kommen kann.

Es hat deshalb nicht an Versuchen gefehlt, die Korrosionsbeständigkeit feuerfester keramischer Produkte auf anderem Wege zu verbessern.

In diesem Zusammenhang ist die Verwendung so genannter "Korrosionsinhibitoren" bekannt. Es handelt sich hierbei um Zusatzmittel, die dem Versatz zugemischt werden, mit deren Hilfe die Korrosion des fertigen Produktes herabgesetzt werden soll.

Der Erfindung liegt insofern die Aufgabe zugrunde, eine Möglichkeit aufzuzeigen, das Korrosionsverhalten feuerfester keramischer Produkte im Hochtemperatur-Anwendungsbereich (> 1.200° Celsius, insbesondere > 1.500° Celsius) zu verbessern, und zwar ohne gleichzeitig umweltgefährdende Substanzen bei der Anwendung freizusetzen.

In umfangreichen Versuchen wurde festgestellt, dass es andere Gruppen von Elementen beziehungsweise Verbindungen als Alternative zum Chromoxid gibt, die nicht toxisch sind und die Korrosionsneigung eines zugehörigen gebrannten fertigen Produktes drastisch herabsetzen, und zwar ohne negative Auswirkungen auf das mechanische Verhalten der Produkte und ohne negative Auswirkungen auf die Temperaturbeständigkeit und Temperaturwechselbeständigkeit.

Diese Gruppen werden im weitesten Sinne definiert durch die Elemente der Übergangsmetalle (gemäß Definition IUPAC, Römpp "Chemielexikon" 9. Auflage, ISBN 3-13-735109-X, Seite 4787 ff.) und deren Verbindungen.

Dazu gehören Verbindungen der Übergangsmetalle untereinander wie Yttriumwolframat, Wolframit (Fe, Mn) WO₄ oder Columbit [(Fe, Mn)(Nb, Ta)₂]O₆.

Dazu gehören ferner solche nicht oxidische Verbindungen von Übergangsmetallen, die nicht schon in der vorstehenden Gruppe erfasst sind, wie Molybdändisilicid (MoSi₂), Mo₅Si₃ und FeMo.

Insbesondere wurden bei Verbindungen der Übergangsmetalle mit Erdalkalielementen korrosionshemmende Eigenschaften beobachtet.

Die genannten korrosionshemmenden Substanzen bilden sich beim Brand (siehe nachstehende Ausführungen zur Auswahl eines Rohstoffversatzes) oder werden dem fertigen Produkt zugesetzt, zum Beispiel mittels Vakuumbehandlung infiltriert. Sie lagern sich vorteilhaft in den Zwickeln (Hohlräumen) zwischen den Körnern des feuerfesten Materials (der refraktären Grundkomponente) an und tragen zur Verringerung des korrosiven Schlackenangriffs bei (insbesondere bei den genannten sauren Schlacken). Bei der Bindung von hydratationsempfindlichem Ca mit einem Übergangsmetall wird gleichzeitig die Hydratationsneigung herabgesetzt. Dies gilt auch für ungetränkte Produkte.

In ihrer allgemeinsten Ausführungsform umfasst die Erfindung ein feuerfestes keramisches Produkt, das
a) ≥ 93 Masse-% mindestens einer refraktären Grundkomponente und
b) ≤ 7 Masse-% mindestens einer korrosionshemmenden Komponente aus der Gruppe:
   b1) Übergangsmetalle
   b2) Verbindungen von Übergangsmetallen untereinander
   b3) nicht oxidische Verbindungen von Übergangsmetallen
   b4) oxidische Verbindungen von Übergangsmetallen
   b5) Verbindungen der Übergangsmetalle mit Ca, Ba, Sr
enthält.

Dabei können eine oder mehrere der Gruppenmitglieder b1 bis b5 ausgeschlossen werden.

Verschiedene Weiterbildungen ergeben sich aus den Merkmalen der Unteransprüche und den sonstigen Beschreibungsunterlagen.

Der Rohstoffversatz ist entsprechend einzustellen, sofern die korrosionshemmenden Komponenten nicht erst durch Tränkung des fertigen gebrannten Produktes eingebracht werden. Der Versatz enthält also entsprechende Zusatzmittel.

Zu dieser Gruppe von Zusatzmitteln gehören beispielsweise metallisches Molybdän, Molybdän-Verbindungen, metallisches Wolfram und Wolfram-Verbindungen.

Sowohl Molybdän als auch Wolfram weisen Ähnlichkeiten mit Chrom auf, sind jedoch beide nicht toxisch. Beide sind mit anderen Metallen, wie Aluminium, Blei, Eisen, Nickel, Mangan oder Chrom leicht legierbar. Neben diesen Legierungen sind andere Molybdän - und Wolframverbindungen für die Verwendung als Zusatzmittel geeignet, beispielsweise MoSi₂, Mo₅Si₃, FeMo, WO₃, WSi₂ oder Niob- und Tantal-Verbindungen.

Ebenso ist es möglich, weitere Komponenten dem Versatz zuzumischen, beispielsweise ein Bindemittel oder Antioxidantien.

Die Erfindung schließt keramisch gebundene feuerfeste Produkte ebenso ein wie chemisch gebundene Produkte. Die feuerfesten keramischen Produkte können monolithische Massen, Mörtel oder dergleichen sein. Insbesondere bezieht sich die Erfindung aber auf die Herstellung feuerfester keramischer Formteile, beispielsweise in Form von Steinen, Platten, Hülsen oder dergleichen.

Soweit Massen angesprochen sind schließt dies auch hydraulisch gebundene Massen ein.

Die refraktäre Grundkomponente kann mindestens eine basische Grundkomponente sein, beispielsweise aus der Gruppe: Sintermagnesia, Schmelzmagnesia, Magnesia-Chromit, XY₂O₄-Spinell (mit X = Mg, Fe, Mn, Zn und Y = Al, Fe, Cr), Dolomitsinter etc.

Eine geeignete Grundkomponente kann zumindest anteilig auch eine nicht-basische Grundkomponente sein, beispielsweise aus der Gruppe: Tonerde, Korund, ZrO₂, Zirkonsilikat (ZrO₂ · SiO₂), Mullit, TiO₂.

Ein entsprechender Versatz kann in üblicher Weise aufbereitet werden, beispielsweise durch Vermischen der refraktären Grundkomponente mit einem Bindemittel, anschließender Formgebung (zum Beispiel durch Pressen) und Brand zur Sinterung, insbesondere bei Temperaturen > 1.200° Celsius, aber auch bei Temperaturen > 1.500° Celsius.

Das korrosionshemmende Zusatzmittel wird am besten als fein gemahlenes Pulver (d₅₀ ≤150µm, insbesondere ≤ 100 µm) eingebracht.

Die Zusatzmittel können als Primärrohstoffe eingesetzt werden. Es ist aber ebenso möglich, Recyclingmaterialien zu verwenden. Molybdän-hältige Zusatzmittel der genannten Art lassen sich zum Beispiel aus abgebrannten Heizelementen durch entsprechende Vermahlung bereitstellen. Derartige Heizelemente bestehen beispielsweise aus Molybdän-Disilizid (MoSi₂), teilweise auch in Kombination mit Wolfram-Verbindungen. Damit steht ein preiswertes Abfallprodukt als Rohstoff für die erfindungsgemäße Verwendung zur Verfügung.

Im Übrigen bilden sich die genannten korrosionshemmenden Verbindungen wie Ca-Molybdat oder Wolframat während des Brandes der Produkte, wobei zum Beispiel vorteilhaft Calcium gebunden wird. Dabei sinkt die Hydratationsanfälligkeit des fertigen Produktes.

Die Erfindung wird nachstehend anhand verschiedener Ausführungsbeispiele näher erläutert.

Dazu wurde an verschiedenen feuerfesten Werkstoffen ein dynamischer Verschlackungstest (drip slag test) gemäß ASTM-Standard C 768 für Steine aus der Nichteisenmetall-Industrie durchgeführt. Die Schlacke hatte folgende Zusammensetzung [in M-%] (Bestimmung nach oxidierender Glühung):

| | |
|---|---|
| SiO₂: | 23 |
| Fe₂O₃: | 43 |
| SO₃: | 9 |
| CuO: | 13 |
| PbO: | 3 |
| ZnO: | 5 |
| Al₂O₃: | 1 |
| Sonstige | 3 |
| | 100 |

Folgende, bei 1.650° C gebrannte Probenkörper wurden bei einer Versuchstemperatur von 1.480° C an Luft untersucht (Angaben der Korngrößen beziehen sich auf den Versatz):
Beispiel 1: 100 Masse-% Sintermagnesia (≤ 6 mm)
Beispiel 2: 93 Masse-% Sintermagnesia (≤ 6 mm), 7 Masse-% feinteilige (100 µm) MgO-Suspension, 1 Masse-% MoSi₂ (als Pulver < 100 µm)
Beispiel 3: 100 Masse-% Magnesia-Chromit
Beispiel 4: 99,7 Masse-% Magnesia-Chromit, 0,3 Masse-% FeMo (< 100 µm)

Der erwähnte Verschlackungstest erbrachte folgende Verschleißvolumina:
Beispiel 1: 65 cm³
Beispiel 2: 24 cm³
Beispiel 3: 37 cm³
Beispiel 4: 2,2 cm³

Die Ergebnisse des Verschleißversuches belegen, dass erfindungsgemäße Produkte unter Verwendung der genannten Zusatzmittel beziehungsweise mit den genannten korrosionshemmenden Phasen ein deutlich geringeres Verschleißvolumen aufweisen. Im Fall des Beispiels 4 ist das Verschleißvolumen so gering, dass der entsprechende Stein als nahezu korrosionsresistent gegenüber der aufgetropften fayalitischen Schlacke gelten kann.

Aus den Gruppen der Zusatzmittel (für den Versatz) beziehungsweise Elementen und Verbindungen (im fertigen Produkt) können einzelne oder Untergruppen ausgeschlossen werden.

## Patentansprüche

1. Feuerfestes keramisches Produkt, das
a) ≥ 93 Masse-% mindestens einer refraktären Grundkomponente und
b) ≤ 7 Masse-% mindestens einer korrosionshemmenden Komponente aus der Gruppe:
b1) Verbindungen von Übergangsmetallen untereinander
b2) oxidische Verbindungen von Übergangsmetallen
b3) Verbindungen der Übergangsmetalle mit Ca, Ba, Sr
enthält.

2. Produkt nach Anspruch 1, bei dem der Anteil der korrosionshemmenden Komponente ≤ 5 Masse-% beträgt.

3. Produkt nach Anspruch 1, bei dem der Anteil der korrosionshemmenden Komponente ≤ 3 Masse-% beträgt.

4. Produkt nach Anspruch 1, bei dem der Anteil der korrosionshemmenden Komponente ≤ 2 Masse-% beträgt.

5. Produkt nach Anspruch 1, bei dem der Anteil der korrosionshemmenden Komponente ≤ 1 Masse-% beträgt.

6. Produkt nach Anspruch 1, bei dem der Anteil der korrosionshemmenden Komponente ≤ 0,5 Masse-% beträgt.

7. Produkt nach Anspruch 1, mit mindestens einer korrosionshemmenden Komponente aus der Gruppe: Ca-, Ba-, Sr-Molybdat, -Wolframat, -Niobat, -Tantalat.

8. Produkt nach Anspruch 1, bei dem mindestens eine refraktäre Grundkomponente eine basische Grundkomponente ist.

9. Produkt nach Anspruch 8, bei dem die basische Grundkomponente aus der Gruppe: Sintermagnesia, Schmelzmagnesia, Magnesia-Chromit, XY₂O₄-Spinell, Dolomitsinter stammt.

10. Produkt nach Anspruch 1, bei dem mindestens eine refraktäre Grundkomponente eine nicht-basische Grundkomponente ist.

11. Produkt nach Anspruch 10, bei dem die nicht-basische Grundkomponente zumindest anteilig aus der Gruppe: Tonerde, Korund, ZrO₂, Zirkonsilikat, Mullit, TiO₂ stammt.

12. Produkt nach Anspruch 1, dessen korrosionshemmende Komponente(n) keine nicht-oxidischen Verbindungen von Zr, Ti, Cr, Hf, Fe und keine Verbindungen dieser Elemente mit Ca enthält (enthalten).

13. Produkt nach Anspruch 1 mit einem Verschleißvolumen nach ASTM-C 768 von < 50 cm³.

14. Produkt nach Anspruch 1 mit einem Verschleißvolumen nach ASTM-C 768 von < 30 cm³.
